# EUROPEAN PATENT SPECIFICATION

(11) **EP 0 613 997 B1**
(45) Date of publication and mention of the grant of the patent: **15.05.1996**
(21) Application number: 94301427.4
(22) Date of filing: 28.02.1994
(51) Int. Cl.: F01N 3/28

(54) **Catalyst carrier body in exhaust gas cleaning system and manufacturing method of the carrier body**
Katalysatorträger in einem Abgasreinigungssystem und Herstellungsverfahren des Trägerkörpers
Support catalytique dans un système de purification de gaz d'échappement et méthode de fabrication de corps-support

(30) Priority: 05.03.1993 JP 71246/93
(43) Date of publication of application: 07.09.1994
(73) Proprietor: SHOWA AIRCRAFT INDUSTRY CO., LTD., Tokyo 160 (JP)
(72) Inventor: Mutoh, Tsutomu, c/o Showa Aircraft Ind. Co., Ltd., Akishima-shi, Tokyo 196 (JP)
(74) Representative: Jackson, Peter Arthur

(56) References cited:
- EP-A- 0 514 572
- DATABASE WPI Section Ch, Week 8950, 1989 Derwent Publications Ltd., London, GB; Class J04, AN 89-367384 & JP-A-1 274 845 (CALSONIC CORP) 2 November 1989

## Description

The present invention relates to a catalyst carrier body for use in an exhaust gas cleaning system or apparatus. More particularly, the invention relates to a catalyst carrier body used in a catalytic converter to clean an exhaust gas from an automobile engine or the like as a catalyst holding body to which particles of a catalyst are deposited.

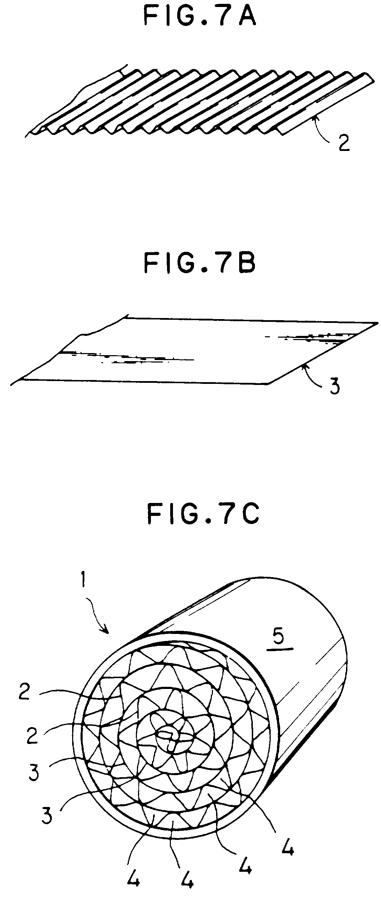

Figs. 7A to 7C are perspective views of an existing catalyst carrier body 1 typically used in existing exhaust gas cleaning systems and known from JP-A-1274845. The catalyst carrier body 1 typically includes a corrugated metal sheet 2 as shown in Fig. 7A and one or two flat metal sheets 3 as shown in Fig. 7B which are alternatingly staked, rolled and brazed together such that the catalyst carrier body, as a whole, exhibits a multi-rolled configuration to make a honeycomb structure in which cell walls are defined by the corrugated sheet 2 and the flat sheets 3. In Fig. 7C, numeral 4 designates each cell, and 5 denotes an outer cylinder of the catalyst carrier body 1.

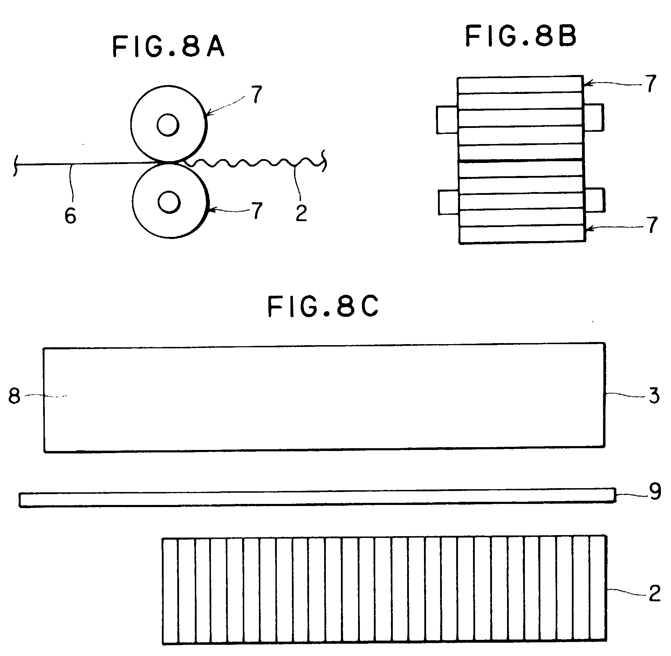

Figs. 8A to 8C are also provided to explain the same existing carrier body 1, in which Figs. 8A and 8B are a side elevation and a front elevation of a forming roller 7 for shaping a flat plate 6 into the corrugated sheet 2, and Fig. 8C is a plan view of a combination of the corrugated sheet 2 and the flat sheet 3. In Fig. 8C, numeral 8 denotes an outermost portion of the flat sheet 3 to be bonded to the outer cylinder 5, and 9 designates a brazing filler metal. The catalyst carrier body 1 fabricated in this manner is typically used, for example, in an automobile engine to introduce therein a hot exhaust gas from the engine such that particles of the catalyst deposited to the carrier body react on harmful substances contained in the exhaust gas to clean the gas.

The existing catalyst carrier body 1, however, involves various problems discussed below.

First, the corrugates sheet 2 and the flat sheet 3 are different in thermal expansion rate when exposed to severe heat while a hot exhaust gas passes through and heat is generated by catalytic reaction. More specifically, since the corrugated sheet 2, made by folding the flat plate 6 in the form of continuous waves, is different in thermal expansion rate from the flat sheet 3 having the original form of the flat plate 6, due to the difference in shape therebetween, the corrugated sheet 2 has a much larger expansion rate than the flat sheet 3 and much more expansive. The existing catalyst carrier body 1, however, prepares the corrugated sheet 2 and the flat sheet 3 in separate bodies and then joins them by brazing in an integrally restricted status. Therefore, the existing catalyst carrier body 1 is subjected to thermal stress due to the difference in expansion between the corrugated sheet 2 and the flat sheet 3, and hence causes fatigue of the materials due to repeated thermal stress in a long use, which in turn causes deterioration, breakage cracking or other damages of cell walls defined by the corrugated sheet 2 and the flat sheet 3. Therefore, the existing carrier body 1 is insufficient in durability because of fatigue of materials due to thermal stress under severe environments of use.

Secondly, since the existing carrier body 1 uses a combination of the corrugated sheet 2 and the flat sheet which have different configurations and prepared as separate bodies, it requires a relatively large number of parts and causes a high cost.

It is therefore an object of the present invention to provide a catalyst carrier body for use in an exhaust gas cleaning system and its manufacturing method which alleviates thermal stress to materials and decreases the number of parts by using foil sheets which each include both one or more corrugated portion and one or more flat portions defined as different but contiguous areas of a single common foil sheet and extending substantially in parallel with the length direction of the foil sheet.

In one aspect of the invention, a catalyst carrier body for use in an exhaust gas cleaning system includes a plurality of elongated metal foil sheets joined such that a corrugated portion of one of the foil sheets is opposed to a flat portion of another of the foil sheets, and rolled in multiple layers and brazed together to form a honeycomb structure (as described in JP-A-1274845); is characterised in that each of the metal foil sheets is a unitary member having a plurality of areas extending substantially in parallel with the length direction thereof and providing one or more corrugated portions and one or more flat portions.

In a further aspect of the invention, a method for manufacturing a catalyst carrier body according to the first aspect of the invention for use in an exhaust gas cleaning system includes preparing an elongate metal foil sheet which has at least one corrugated portion and at least one flat portion extending substantially in parallel with the length direction; stacking a plurality of such foils sheets with the corrugated portions of one of the foils sheets opposed to the flat portion of another of the foil sheets to form a laminated structure; rolling the laminated structure in multiple layers and brazing it to make a honeycomb structure.

The carrier body is typically used under a severe thermal environment exposed to a hot exhaust gas and to heat generated by catalytic reaction. The corrugated portion and the flat portion of the foil sheet defining cell walls are different in expansion rate, and the corrugated portion having a larger expansion rate is more expansive. In this respect, each foil sheet includes the corrugated portion and the flat portion which shares the common foil sheet and extend substantially in parallel, and a plurality of the foil sheets are stacked and brazed such that the corrugated portions are opposed to flat portions. Therefore, expansion of the corrugated portions are restricted by the flat portions, and both portions expand by substantially the same rate, absorbing a difference in expansion rate therebetween. As a result, thermal stress to materials is alleviated, the difference in expansion rate due to the thermal stress is removed, fatigue of the materials does not occur even in a long use, and deterioration, cracking, breakage or other damages are prevented.

Moreover, since the catalyst carrier body uses a less number of parts, it can be realized in a simple construction.

In the accompanying drawings:-
Fig. 1A is plan view of foil sheets constituting a catalyst carrier body for use in an exhaust gas cleaning system, taken as a first embodiment of the invention;
Fig. 1B is a side elevation of the foil sheets shown in Fig. 1A;
Fig. 1C is a perspective view of the foil sheets shown in Figs. 1A;
Fig. 2A is a plan view of foils sheets constituting a catalyst carrier body taken as a second embodiment of the invention;
Fig. 2B is a side elevation of the foil sheets shown in Fig. 2A;
Fig. 2C is a perspective view of the foil sheets shown in Fig. 2A;
Fig. 3A is a plan view of foil sheets constituting a catalyst carrier body taken as a third embodiment of the invention;
Fig. 3B is a side elevation of the foil sheets shown in Fig. 3A;
Fig. 3C is a perspective view of the foil sheets shown in Fig. 3A;
Fig. 4A is a fragmentary perspective view of a foil sheet constituting a catalyst carrier body taken as a fourth embodiment of the invention;
Fig. 4B is a fragmentary enlarged perspective view of the boundary between a corrugated portion and a flat portion in any of the first to fourth embodiments;
Fig. 4C is a perspective view of the catalyst carrier body according to any of the first to fourth or other embodiments;
Fig. 5 is a plan view of a combination of the foil sheets according to the first embodiment;
Fig. 6A is a side elevation of a variety of shaping rollers;
Fig. 6B is a front elevation of a shaping roller used in the first embodiment of the invention;
Fig. 6C is a front elevation of a shaping roller used in the second embodiment;
Fig. 6D is a front elevation of a shaping roller used in the second embodiment;
Fig. 6E is a front elevation of a shaping roller used in the third embodiment;
Fig. 6F is a front elevation of a shaping roller used in the fourth embodiment;
Fig. 7A is a perspective view of a corrugated sheet constituting an existing catalyst carrier body for use in an exhaust gas cleaning system;
Fig. 7B is a perspective view of a flat plate constituting the same existing catalyst carrier body;
Fig. 7C is a perspective view of the entirety of the same existing catalyst carrier body;
Fig. 8A is a side elevation of a shaping roller used to shape the corrugated sheet shown in Fig. 7A;
Fig. 8B is a front elevation of the roller shown in Fig. 8A; and
Fig. 8C is a plan view of a combination of the corrugated sheet and the flat sheet shown in Figs. 7A and 7B.

The invention is explained below in detail by way of preferred embodiments shown in and based on the drawings.

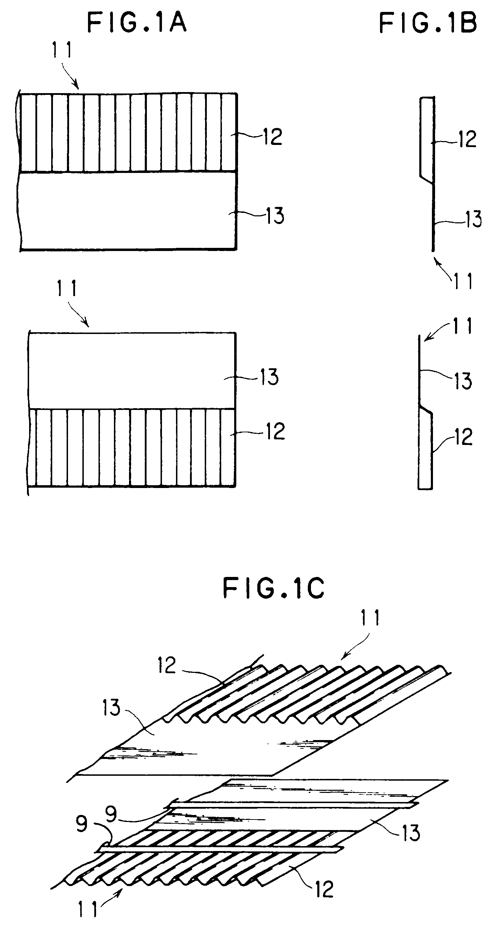

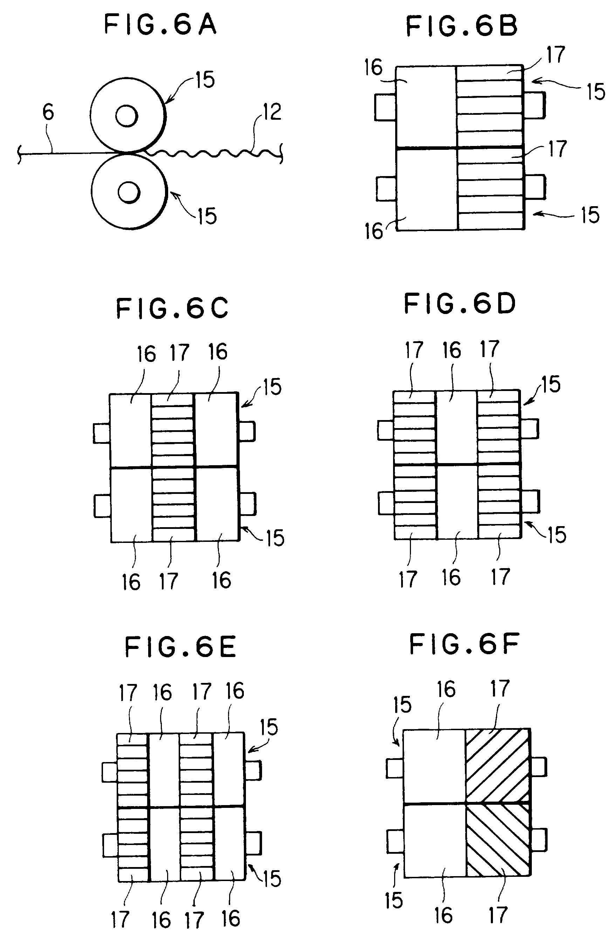

With reference to Figs. 1A to 6F, a method for manufacturing a catalyst carrier body for use in an exhaust gas cleaning system fir prepares elongated metal foil sheets 11 made of stainless steel or any other suitable metal and each being a unitary body including one or more corrugated portions 12 and one or more flat portions which shares the common foil sheet and extend substantially in parallel with the length direction. A variety of configurations of the foil sheets are proposed below.

A first embodiment shown in Figs. 1a to 1C prepares two elongated foil sheets each having two elongated areas extending substantially in parallel with the length direction. In each of the foil sheets, one of the two areas provides a corrugated portion 12, and the other of the two areas provides a flat portion 13. The corrugated portion 12 is wrinkled such that grooves and ridges made by vertices of triangular corrugation extend in the width direction, i.e. at right angles with respect to the length direction of the foil sheet 11, that is, such that waves are repeated in the length direction. The flat portion 13 exhibits a flat plane.

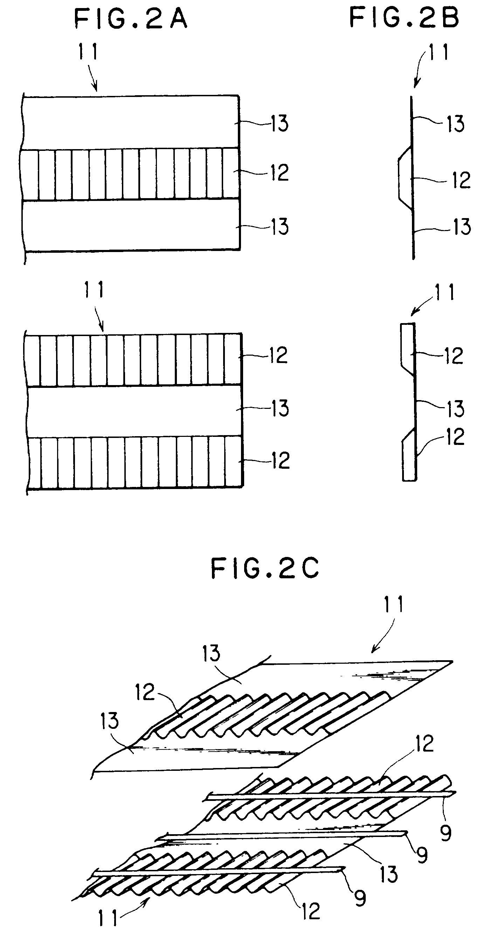

A second embodiment shown in Figs. 2A to 2C prepares two elongated foil sheets 11 each having three elongated areas extending substantially in parallel with the length direction. In one of the foil sheets 11 (upper one in the drawings), the central area provides a corrugated portion 12, and two side areas provide flat portions 13. In the other of the foil sheets 11 (lower one in the drawings), the central area provides a flat portion 13, and two side areas provide corrugated portions 12. Configurations of the corrugated portions 12 and the flat portions 13 themselves are the same as those of the first embodiment. The second embodiment therefore prepares two different kinds of foils sheets 11.

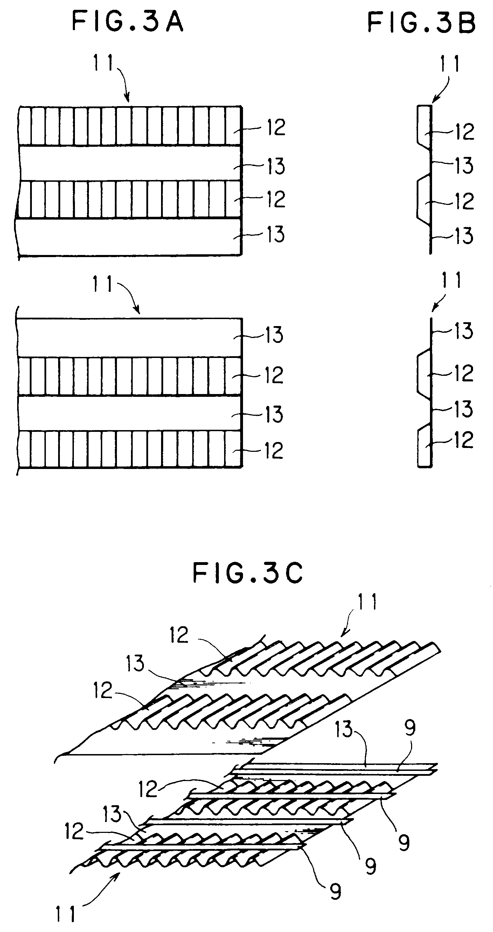

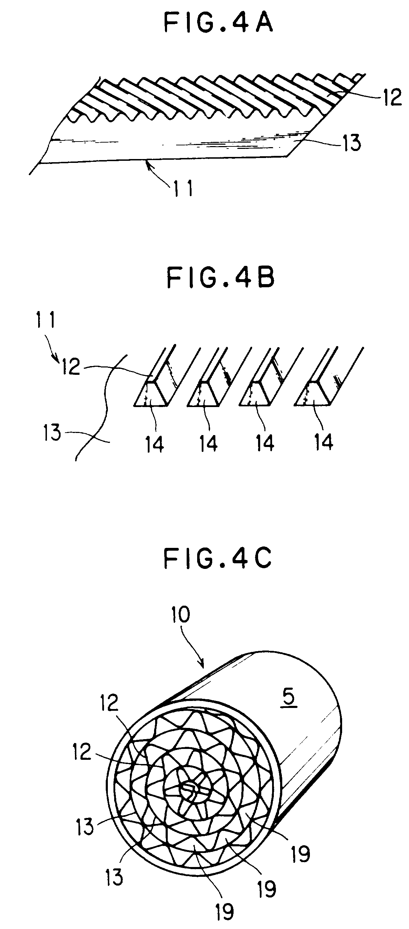

A third embodiment shown in Figs. 3A to 3C prepares two elongated foil sheets each having four elongated areas extending substantially in parallel with the length direction. In each of the foil sheets, the four areas provide two corrugated portions 12 and two flat portions 13 in an alternating sequence. Configurations of the corrugated portions 12 and the flat portions 13 themselves are the same as those of the first embodiment. A fourth embodiment shown in Fig. 4A prepares two foil sheets 11 including two elongated areas extending substantially in parallel with the length direction. In each of the foil sheets 11, one of the two areas provides a corrugated portion 12, and the other of the areas provides a flat portion 13. The corrugated portion 12 in this embodiment is wrinkled such that grooves and ridges made by vertices of triangular corrugation extend diagonally with respect to the length direction of the foil sheet 11 to form a helical configuration when rolled, unlike the first, second and third embodiments in which grooves and ridges of the corrugation extend at right angles to the length direction of the foil sheet 11. The flat portion 13, however, has the same configuration as that of the first embodiment.

Other various embodiments are also possible in which, for example, the foil sheet 11 includes five or more areas providing corrugated portions and flat portions in an alternating sequence, an/or one or more boundary lines between the corrugated portions and the flat portions 13 extend aslant of the length direction of the foil sheet 11. It is also possible that the areas have different widths and that the diagonal corrugation of the fourth embodiment is modified to symmetrically invert the orientation of the diagonal corrugation at an intermediate folded portion thereof.

The boundary between the corrugated portion 12 and the flat portion 13 may be configured in a variety of ways explained below.

When the corrugated portion 12 is formed or shaped in the foil sheet 11, the boundary between the corrugated portion 12 and the flat portion 13 may define slanting surfaces 14 contiguous to the flat portion 13 as shown in Fig. 4B. That is, the slanting surfaces 14 may gradually rise from the flat portion 13 toward the corrugated portion 12. Alternatively, although not shown, small cutouts may be provided along the boundary between elongated areas of the foil sheet 11 to shape selective portions in an area at one side of the cutouts into the corrugated configuration.

With reference to Figs. 6A to 6F, a variety of shaping roller for fabricating the foils sheets 11 including one or more corrugated portions 121 and one of more flat portions 13 are explained below.

The foil sheet 11 according to the first embodiment shown in Figs. 1A and 1B may be fabricated by using shaping rollers 15 shown in Fig. 6B and by introducing a flat plate 6 between the shaping rollers 15 as shown in Fig. 6A. Each of the shaping rollers 15 show in Fig. 6B is a combination of a flat roller portion 17 and a corrugated roller portion 16. The corrugated roller portion 17 defines on the circumferential surface thereof triangular (or other-shaped) wave-like grooves and ridges extending in parallel with the axial direction in the form of a gear. The flat roller portion 16 defines a planar circumferential surface and may be made of a resin or rubber-based material. By introducing the flat plate 16 in the form of an elongated metal foil is introduced between a pair of such shaping rollers 15, the foil sheet 11 shared by the corrugated portion 12 and the flat portion 13 in half-and-half is obtained. By using two such foil sheets 11 and reversing one of them, the foil sheets shown in Figs. 1A and 1B are prepared.

The foil sheets 11 according to the second embodiment shown in Figs. 2A and 2B may be fabricated by using shaping rollers 15 shown in Figs. 6C and 6D and by introducing a flat plate 6 between the shaping rollers 15 as shown in Fig. 6A. Each of the shaping rollers 15 shown in Fig. 6C is a combination of two flat roller portions 16 at opposite sides and one corrugated roller portion 17 in the center. In contrast, each of the shaping rollers shown in Fig. 6D is a combination of one flat roller portion 16 in the center and two corrugated roller portions 17 at opposite sides. By introducing the flat plate 6 in the form of an elongated metal foil between a pair of such shaping rollers 15 shown in Fig. 6C, the foil sheet 11 including the corrugated portion 12 in the central one of three areas is obtained. By introducing the flat plate 6 between a pair of such shaping roller 15 shown in Fig. 6D, the foil sheet 11 including the flat portion 13 in the central one of three areas is obtained. Thus the two kinds of foil sheets shown in Figs. 2A and 2B are prepared.

The foil sheet 11 according to the third embodiment shown in Figs. 3A and 3B may be fabricated by using shaping rollers 15 shown in Fig. 6E and by introducing a flat plate 6 between the shaping rollers 15 as shown in Fig. 6A. Each of the shaping rollers 15 show in Fig. 6E is a combination of two flat roller portions 17 and two corrugated roller portions 16 disposed in an alternating order. By introducing the flat plate 16 in the form of an elongated metal foil is introduced between a pair of such shaping rollers 15, the foil sheet 11 shared by two corrugated portion 12 and two flat portion 13 in an alternating order is obtained. By using two such foil sheets 11 and reversing one of them, the foil sheets shown in Figs. 3A and 3B are prepared.

The foil sheets 11 according to the fourth embodiments shown in Fig. 4A may be fabricated by using shaping rollers 15 as shown in Fig. 6F and by introducing a flat plate 6 between the shaping rollers 15. Each of the shaping rollers 15 is a combination of flat roller portion 16 and a corrugated roller portion 17. The corrugated roller portion 17 defines on the circumferential surface thereof triangular (or other-shaped) wave-like grooves and ridges extending diagonally with respect to the axial direction in the form of a helical gear, unlike those shown in Figs. 6B to 6E in which grooves and ridges extend in parallel with the axial direction. By introducing the flat plate 6 in the form of an elongated metal foil between a pair of such shaping rollers 15, the foil sheet 11 shown in Fig. 4A shared by the helical corrugated portion 12 and the flat portion 13 in half-and-half is obtained. Then two such foil sheets 11 are prepared by reversing one of them.

The manufacturing method subsequently stacks a plurality of foil sheets 11 prepared (two foil sheets in the embodiments illustrated) such that corrugated portions 12 are opposed to flat portions 13, rolls them in multiple layers, and then brazes them.

These steps are explained below in a greater detail. Two foil sheets 11 thus prepared and cut in an appropriate length are combined in a relation to oppose corrugated portions 12 to flat portions 13 therebetween. That is, two foil sheets 11 are combined in the manner shown in Fig. 1C in case of the first embodiment, in Fig. 2C in case of the second embodiment, and in Fig. 3C in case of the third embodiment. In these drawings, numeral 9 denotes a brazing filler metal interposed between two combined foil sheets 11. The illustrated embodiments uses narrow belt-shaped brazing filler metals 9 extending in the length direction at appropriate intervals in the width direction such that at least one brazing filler metal 9 is applied to each opposed pair of the corrugated portion 12 and the flat portion 13. Therefore, the first embodiment uses two brazing filler metals 9 as shown in Fig. 1C, the second embodiment uses three brazing filler metals 9 as shown in Fig. 2C, and the third embodiment uses four brazing filler metals 9 as shown in Fig. 3C. A variety of brazing filler metals may be used, such as an amorphus brazing filler metal made by continuously quenching a liquid of molten metal, one in a paste status, one in a powder status, and so on.

Foil sheets 11 thus combined are stacked in a positional relation to oppose the corrugated portion 12 to the flat portion 13 with brazing filler metals 9 interposed therebetween, then rolled in multiple layers, and bonded together by the brazing filler metals 9. As a result, a rolled catalyst carrier body 10 is obtained, which has a circular cross section or a slightly pressed oval cross section.

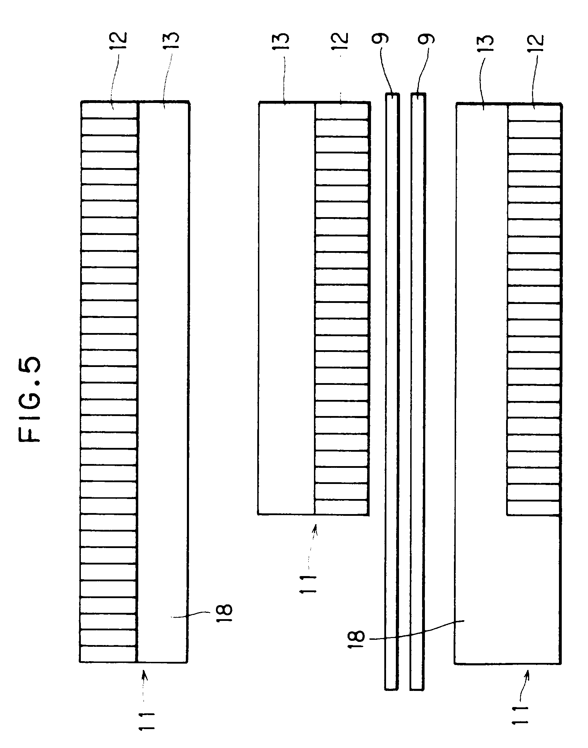

Outermost circumferential portions 18 of the rolled foil sheets 11 are further explained below with reference to Fig. 5 shown to assist explanation of the first embodiment. One of the foil sheets 11 (at the top of Fig. 5) includes the corrugated portion 12 in addition to the flat portion 13 also in its outermost circumferential portion 18. In contrast, the other of the foil sheets 11 is cut to remove its outermost circumferential portion as shown in the center of Fig. 5 or does not has the corrugated portion 12 in its outermost circumferential portion to define the flat portion over the full width thereof as shown in the bottom of Fig. 5. Then the catalyst carrier body 10 is made by using one foil sheet 11 having a longer corrugated portion 12 to the substantially full length end one of the other foil sheets 11 having shorter corrugated portions 12, coaxially inserted in the outer cylinder made of a stainless steel or other suitable material as a case, and bonded at the outermost circumferential portion 18 to the outer cylinder 5.

By the method explained above, the catalyst carrier body 10 shown in Fig. 4C is fabricated according to any of the first to fourth embodiments and contained in the outer cylinder 5. Then the catalyst carrier body 10 is made of two or more metal foil sheets 11 each having one or more corrugated portions 12 and one or more flat portions 13 extending substantially in parallel with the length direction such that the corrugated portions 12 are opposed to the flat portions 13 by rolling them in multiple layers and by brazing them together so as to form a rolled honeycomb configuration as a whole. That is, in the catalyst carrier body 10, two foil sheets 11 each have one or more corrugated portion 12 and one or more flat portion 13 sharing the common foil sheet 11 and extending in the length direction, and are stacked with their corrugated portion 12 and flat portions 13 in face-to-face contact so as to define cell walls.

Thus the catalyst carrier body 10 exhibits a honeycomb structure. That is, the corrugated portions 12 and the flat portions of the foil sheets 11 define cell walls in the catalyst carrier body 10. Such cell walls may have a quadrangular, trapezoidal, hexagonal or any other cross-sectional configuration in addition to the triangular cross-sectional configuration illustrated in the drawings. As a result, the catalyst carrier body 10 is made as a composite body of a number of independent hollow tubular cells 19. Since the catalyst carrier body 10 thus exhibits a honeycomb configuration, it is, like a typical honeycomb structure, excellent in durability per weight, and has a lightness, a high rigidity and strength. The catalyst carrier body 10 is also excellent in rectification, plane accuracy, thermal insulation, noise insulation, or the like, and economical because of being easy to fabricate. Further, because a large surface area per unit volume, that is, because the corrugated portion 12 and the flat portion 13 of the foil sheet 11 provide cell walls having a large surface, the catalyst carrier body 10 is used as a catalytic converter in, for example, an automobile engine to clean an exhaust gas by catalytic reaction of particles of a catalyst applied to surface of the corrugated portion 12 and the flat portion 13 defining cell walls as a catalyst holding body. That is, the catalysis carrier body 10 adhesively holds a catalytic material such as precious metal for reacting on and removing harmful substances in the exhaust gas by oxidation or deoxidation is applied to the wide area via holding layers made alumina or other suitable material, and provides a large contact area with the exhaust gas.

When the catalyst carrier body 10 having any of the above-described arrangements according to the invention is used in an automobile engine, an exhaust gas discharged from the engine during navigation is introduced into the cells 19, and it is released therefrom as clean air after harmful substances are removed by catalytic reaction. Thus the catalysis carrier body 10 is typically used under severe environments exposed to a hot exhaust gas and to heat generated by the catalytic reaction. In this way of use, the catalysis carrier body 10 behaves as explained below.

In a first aspect, since the corrugated portion 12 having the corrugated configuration has a larger thermal expansion rate than that of the flat portion 13 defining the original planar surface of the flat plate 6, and the corrugated portion 12 is much more expansive toward the original form of the flat plate 6. However, since the invention makes the corrugated portion to share the common foil sheet 11 with the flat portion 13, and two or more such foil sheets are stacked and brazed together, with their corrugated portions 12 opposed to the flat portions 13, expansion of the corrugated portion 12 is restricted by the flat portion 13. As a result, both portions equally expand under substantially the same condition, and the difference in expansion rate therebetween is absorbed.

In the catalyst carrier body 10, thermal stress is thus alleviated, and a difference in expansion rate upon a thermal stress is overcome. Therefore, even in a long use, fatigue of materials caused by thermal stress pointed out with respect to the existing system is prevented. Hence, deterioration, breakage, cracking and other damages of cell walls defined by the corrugated portion 12 and the flat portion 13 of the foil sheet 11 is reliably prevented.

In a second aspect, the catalyst carrier body 10 according to the invention can be made of a less number of parts. More specifically, the catalyst carrier body 10 and its manufacturing method according to the invention does not need preparation of two different kinds of separate plates, namely, the corrugated plate 2 and the flat plate 3 (Figs. 7A to 8) required in the existing system. That is, by making the foil sheet 11 to include both the corrugated portion 12 and the flat portion 13 in an integral member, the number of parts can be decreased. In particular, the first, third and fourth embodiments shown in Figs. 1A, 3A and 4A, respectively, contribute to reduction of parts and significant simplification of the construction because they can use two foil plates of the same configuration by reversing the orientation of one of them.

In any of the embodiments, the corrugated portion 12 and the flat portion 13 are illustrated as having the same width. However, one of a pair of foil sheets may be made to have provide different widths for the corrugated portion 12 and the flat portion 13. In particular, one of a pair of foil sheets 11 may have a width of the corrugated portion 12 narrower than the width of the flat portion 13 of the other foil sheet 11. In this construction of the catalyst carrier body 10, the surface area of cells walls per unit volume may be varied to appropriately adjust the area for sticking a catalytic material and the contact area with an exhaust gas to appropriate values.

The catalysis carrier body for use in an exhaust gas cleaning system and its manufacturing method described above gives the following effects and advantages by using a foil sheet commonly shared by a corrugated portion and a flat portion extending substantially in parallel with the length direction.

First, thermal stress is alleviated. This results in preventing fatigue of materials due to thermal stress, deterioration, breakage, cracking and other damages of cell walls even in a long use, and therefore results in improvement in durability. Secondly, because of using a less number of parts, the invention contributes to simplification of the construction of the catalyst carrier body and to reduction of cost. Thus the invention overcomes all problems pointed out herein with reference to the existing system.

## Claims

1. A catalyst carrier body for use in an exhaust gas cleaning system, comprising a plurality of elongate metal foil sheets (11), joined such that a corrugated portion of one of the foil sheets is opposed to a flat portion of another of the foil sheets, and rolled in multiple layers and brazed to form a rolled honeycomb configuration; characterised in that each of the metal foil sheets is a unitary member having a plurality of areas extending substantially in parallel with the length direction thereof and providing one or more corrugated portions (12) and one or more flat portions (13).

2. A catalyst carrier body according to claim 1 wherein the plurality of foil sheets (11) are two.

3. A catalyst carrier body according to claim 1 or claim 2, wherein the foil sheet (11) has two of the areas providing one corrugated portion (12) and one flat portion (13).

4. A catalyst carrier body according to claim 1 or claim 2, wherein the foil sheet (11) has three of the areas providing one or two corrugated portions (12) and two or one flat portion (13) in an alternating sequence.

5. A catalyst carrier body according to claim 1 or claim 2, wherein the foil sheet (11) has four or more of the areas providing a plurality of corrugated portions (12) and a plurality of flat portions (13) in an alternating sequence.

6. A catalyst carrier body according to any one of the preceding claims, wherein the corrugated portion (12) defines ridges and grooves of corrugation extending substantially at right angles with respect to the length direction of the sheet (11).

7. A catalyst carrier body according to any one of claims 1 to 5, wherein the corrugated portion (12) defines ridges and grooves of corrugation extending diagonally of the length direction of the sheet (11).

8. A method for manufacturing a catalyst carrier body according to claim 1, for use in an exhaust gas cleaning system, the method comprising the steps of combining a plurality of elongate metal foil sheets such that a corrugated portion of one of the foil sheets is opposed to a flat portions of another of the foil sheets to form a stacked structure; and rolling and brazing the stacked structure in multiple layers to make a rolled honeycomb configuration; characterised in that each of the foil sheets is a unitary member having a plurality of areas extending substantially in parallel with the length direction thereof and providing one or more corrugated portions and one or more flat portions.

9. A method according to claim 8, wherein the plurality of foil sheets are two.

10. A method according to claim 8 or claim 9, wherein the foil sheet has two of the areas providing one corrugated portion and one flat portion.

11. A method according to claim 8 or claim 9, wherein the foil sheet has three of the areas providing one or two corrugated portions and two or one flat portion in an alternating sequence.

12. A method according to claim 8 or claim 9, wherein the foil sheet has four or more of the said areas providing a plurality of corrugated portions and a plurality of flat portions in an alternating sequence.

13. A method according to any one of the preceding claims, wherein the corrugated portion defines ridges and grooves of corrugation extending substantially at right angles with respect to the length direction of the sheet.

14. A method according to any one of claims 8 to 12, wherein the corrugated portion defines ridges and grooves of corrugation extending diagonally of the length direction of the sheet.

## Patentansprüche

1. Ein Katalysatorträger zur Verwendung in einem Abgasreinigungssystem, umfassend eine Mehrzahl länglicher Metallfolienblätter (11), die derartig verbunden sind, daß ein gewellter Abschnitt eines der Folienblätter einem flachen Abschnitt eines anderen der Folienblätter gegenüberliegt, und die in mehreren Schichten gerollt und so hartgelötet sind, daß sie eine gerollte Wabenanordnung bilden; dadurch gekennzeichnet, das jedes der Metallfolienblätter ein unitäres Element ist, das eine Mehrzahl Bereiche aufweist, die sich im wesentlichen parallel zu dessen Längsrichtung erstrecken und einen oder mehrere gewellte Abschnitte (12) und einen oder mehrere flache Abschnitte (13) bilden.

2. Ein Katalysatorträger nach Anspruch 1, wobei die Mehrzahl Blattfolien (11) zwei ist.

3. Ein Katalysatorträger nach Anspruch 1 oder Anspruch 2, wobei das Folienblatt (11) zwei der Bereiche aufweist, die einen gewellten Abschnitt (12) und einen flachen Abschnitt (13) bilden.

4. Ein Katalysatorträger nach Anspruch 1 oder Anspruch 2, wobei das Folienblatt (11) drei der Bereiche aufweist, die einen oder zwei gewellte Abschnitte (12) und zwei bzw. einen flachen Abschnitt (13) in abwechselnder Folge bilden.

5. Ein Katalysatorträger nach Anspruch 1 oder Anspruch 2, wobei das Folienblatt (11) vier oder mehr der Bereiche aufweist, die eine Mehrzahl gewellter Abschnitte (12) und eine Mehrzahl flacher Abschnitte (13) in abwechselnder Folge bilden.

6. Ein Katalysatorträger nach einem der vorstehenden Ansprüche, wobei der gewellte Abschnitt (12) Stege und Rillen einer Wellung definiert, die sich im wesentlichen im rechten Winkel im Bezug auf die Längsrichtung des Blattes (11) erstreckt.

7. Ein Katalysatorträger nach einem der Ansprüche 1 bis 5, wobei der gewellte Abschnitt (12) Stege und Rillen einer Wellung definiert, die sich diagonal zur Längsrichtung des Blattes (11) erstreckt.

8. Ein Verfahren zur Herstellung eines Katalysatorträgers nach Anspruch 1 zur Verwendung in einem Abgasreinigungssystem, wobei das Verfahren die Schritte des Kombinierens einer Mehrzahl länglicher Metallfolienblätter derart, daß ein gewellter Abschnitt eines der Folienblätter einem flachen Abschnitt eines anderen der Folienblätter gegenüberliegt, um eine gestapelte Struktur zu bilden; und des Rollens und Hartlötens der gestapelten Struktur in Mehrfachschichten zur Bildung einer gerollten Wabenanordnung umfaßt; dadurch gekennzeichnet, daß jedes der Folienblätter ein unitäres Element ist, das eine Mehrzahl Bereiche aufweist, die sich im wesentlichen parallel zur Längsrichtung erstrecken und einen oder mehrere gewellte Abschnitte und einen oder mehrere flache Abschnitte schaffen.

9. Ein Verfahren nach Anspruch 8, wobei die Mehrzahl Blattfolien zwei ist.

10. Ein Verfahren nach Anspruch 8 oder Anspruch 9, wobei das Folienblatt zwei der Bereiche aufweist, die einen gewellten Abschnitt und einen flachen Abschnitt bilden.

11. Ein Verfahren nach Anspruch 8 oder Anspruch 9, wobei das Folienblatt drei der Bereiche aufweist, die einen oder zwei gewellte Abschnitte und zwei bzw. einen flachen Abschnitt in abwechselnder Folge bilden.

12. Ein Verfahren nach Anspruch 8 oder Anspruch 9, wobei das Folienblatt vier oder mehr der Bereiche aufweist, die eine Mehrzahl gewellter Abschnitte und eine Mehrzahl flacher Abschnitte in abwechselnder Folge bilden.

13. Ein Verfahren nach einem der vorstehenden Ansprüche, wobei der gewellte Abschnitt Stege und Rillen einer Wellung definiert, die sich im wesentlichen im rechten Winkel in Bezug auf die Längsrichtung des Blattes erstreckt.

14. Ein Verfahren nach einem der Ansprüche 8 bis 12, wobei der gewellte Abschnitt Stege und Rillen einer Wellung definiert, die sich diagonal zur Längsrichtung des Blattes erstreckt.

## Revendications

1. Corps support de catalyseur à utiliser dans un système d'épuration de gaz d'échappement, comprenant une pluralité de feuilles métalliques allongées (11), assemblées de manière qu'une partie ondulée de l'une des feuilles soit opposée à une partie plate d'une autre des feuilles, et roulées en couches multiples et brasées pour former une configuration en nid d'abeilles enroulée; caractérisé en ce que chacune des feuilles métalliques est un élément d'un seul tenant qui comprend une pluralité de zones s'étendant sensiblement parallèlement à la direction de sa longueur et présentant une ou plusieurs parties ondulées (12) et une ou plusieurs parties plates (13).

2. Corps support de catalyseur selon la revendication 1, dans lequel le nombre des feuilles métalliques (11) de la pluralité est de deux.

3. Corps support de catalyseur selon la revendication 1 ou la revendication 2, dans lequel la feuille (11) comporte deux des zones présentant une partie ondulée (12) et une partie plate (13).

4. Corps support de catalyseur selon la revendication 1 ou la revendication 2, dans lequel la feuille (11) comprend trois des zones présentant une ou deux parties ondulées (12) et deux ou une partie plate (13), selon une séquence alternée.

5. Corps support de catalyseur selon la revendication 1 ou la revendication 2, dans lequel la feuille (11) comprend quatre ou plus des zones présentant une pluralité de parties ondulées (12) et une pluralité de parties plates (13), selon une séquence alternée.

6. Corps support de catalyseur selon l'une des revendications précédentes, dans lequel la partie ondulée (12) définit des nervures et des rainures d'ondulation qui s'étendent sensiblement à angles droits par rapport à la direction de la longueur de la feuille (11).

7. Corps support de catalyseur selon l'une des revendications 1 à 5, dans lequel la partie ondulée (12) définit des nervures et des rainures d'ondulation qui s'étendent diagonalement par rapport à la direction de la longueur de la feuille (11).

8. Procédé de fabrication d'un corps support de catalyseur selon la revendication 1, à utiliser dans un système d'épuration de gaz d'échappement, le procédé comprenant les étapes consistant à combiner une pluralité de feuilles métalliques allongées d'une manière telle qu'une partie ondulée de l'une des feuilles métalliques est opposée à des parties plates d'une autre des feuilles métalliques, pour former une structure empilée; et à enrouler et braser la structure empilée en couches multiples pour former une configuration en nid d'abeilles enroulée; caractérisé en ce que chacune des feuilles métalliques est un élément d'un seul tenant qui comprend une pluralité de zones s'étendant sensiblement parallèlement à la direction de sa longueur et présente une ou plusieurs parties ondulées et une ou plusieurs parties plates.

9. Procédé selon la revendication 8, dans lequel le nombre des feuilles métalliques de la pluralité est de deux.

10. Procédé selon la revendication 8 ou la revendication 9 dans lequel la feuille comporte deux des zones présentant une partie ondulée et une partie plate.

11. Procédé selon la revendication 8 ou la revendication 9 dans lequel la feuille comprend trois des zones présentant une ou deux parties ondulées et deux ou une partie plate, selon une séquence alternée.

12. Procédé selon la revendication 8 ou la revendication 9, dans lequel la feuille comprend quatre ou plus desdites zones présentant une pluralité de parties ondulées et une pluralité de parties plates, selon une séquence alternée.

13. Procédé selon l'une des revendications précédentes, dans lequel la partie ondulée définit des nervures et des rainures d'ondulation qui s'étendent sensiblement à angles droits par rapport à la direction de la longueur de la feuille.

14. Procédé selon l'une des revendications 8 à 12, dans lequel la partie ondulée définit des nervures et des rainures d'ondulation, qui s'étendent diagonalement par rapport à la direction de la longueur de la feuille.
